Europäisches Patentamt

European Patent Office

Office européen des brevets

(19)

(11) Publication number: **0 136 984**

A2

(12) **EUROPEAN PATENT APPLICATION**

(21) Application number: **84830246.9**

(51) Int. Cl.⁴: **B 60 S 1/08**

(22) Date of filing: **05.09.84**

(30) Priority: **06.09.83 IT 4130383**
**21.08.84 IT 355984**

(43) Date of publication of application:
**10.04.85 Bulletin 85/15**

(84) Designated Contracting States:
**DE FR GB IT**

(71) Applicant: **Marra, Luigi**
**Via Santa Lucia**
**I-08012 Bortigali (Nuoro)(IT)**

(72) Inventor: **Marra, Luigi**
**Via Santa Lucia**
**I-08012 Bortigali (Nuoro)(IT)**

(74) Representative: **Lanzoni, Luciano**
**c/o BUGNION S.p.A. Via Farini, 37**
**I-40124 Bologna(IT)**

(54) **Windscreen wiper autonomous device.**

(57) The device is provided with two probes S1 and S2 that are placed on the external side of the windscreen of a vehicle and comprise a comb shaped element 100 and a linear element 101, both of which are conductors. The former is opposite and close to a further comb shaped element 102 that is subjected to a positive potential Q derived from the dashboard of the vehicle, while the element 101 is a greater distance away from the comb shaped element 102. When the rain closes the contact between the element 102 and probe S1 or S2, the said probes create signals that are suitably recognized by a control circuit of the windscreen wiper motor MT that comprises a detection/regulation circuit CP which, through a control circuit CT, attends to transferring suitable signals to a pilot interface IP for the motor MT to be operated at the first or at the second speed or for it to be halted.

FIG.1

EP 0 136 984 A2

## Windscreen wiper autonomous operation device

The invention relates to a device which, using special probes placed on the windscreen of the vehicle and able to supply suitable signals in the event of rain, can cause, via a detection/regulation circuit, a control circuit downstream of the former, and a pilot interface, every one of the functions of the windscreen wiper motor to operate in a fully autonomous fashion.

As is known, when rain falls, vehicle windscreen wipers are operated at one or more speeds by the user him or herself. The switching on and off of the windscreen wipers, as also varying the speed thereof, are tasks entrusted solely to the user.

The main object of the invention is, therefore, to allow windscreen wipers to operate in a fully autonomous fashion, without the user having to operate or vary the speed of the windscreen wipers when it is raining.

Another object of the invention is to make available an electronic device able, in practice, to cause the functions peculiar to the windscreen wipers to be carried out in a particularly simple way.

A further important object of the invention is that of permitting the operating signals to be recognized through the natural element causing the operation, namely water.

The invention, as characterized by the Claims, thus solves excellently the problem of achieving the fully autonomous operation of the windscreen wiper motor when it rains. With the use of the said device wherein it is envisaged that the probes placed on the windscreen fall within the radius of action of the wiper blades, the result is achieved, on account of the special conformation of the said probes and the form of construction of the said electronic circuit interposed between the said probes and the windscreen wiper motor, of the circuit placed downstream of the probes being energized only when it is raining and, if it is so wished, of the windscreen wipers being operated at more than one speed.

The main advantages are obviously that the driver of the vehicle is freed from having to operate or regulate, at the time rain is falling, the windscreen wipers, without his or her vision being minimally obstructed since the said probes are made of extremely thin condution material.

Further characteristics and advantages of the invention will become more apparent from the detailed description that follows, illustrated purely as an unlimited example on the accompanying drawings, in which :

- Figure 1 outlines the device in question;
- Figure 2 shows a first embodiment for operating the windscreen wipers at one single speed;
- Figure 3 shows, as an example, a first construction of the circuit of the device in question, whereby the windscreen wipers are able to operate at two speeds;
- Figure 4 shows a simplified solution alternative to that depicted in Figure 3;
- Figures 5a and 5b show two possible solutions for the arrangement of the probes on the windscreen of the vehicle.

With reference to the above mentioned drawings, the device in question advantageously utilizes, in part, the orthodox circuit for manually operated windscreen wipers.

The said orthodox circuit envisages provision being made for a hand operated lever for switching on the windscreen wipers, constituted by a double throw switch C2-C2' in which the configuration of the contact C2, connected to the positive potential Q derived from the dashboard of the vehicle, varies from a first inactive position MO, with the contact C2' earthing the supply to a motor MT through what is called an internal switch C3 of the said motor, to a second active position in which the contact C2 supplies the potential Q to the motor MT, with the contact C2' open.

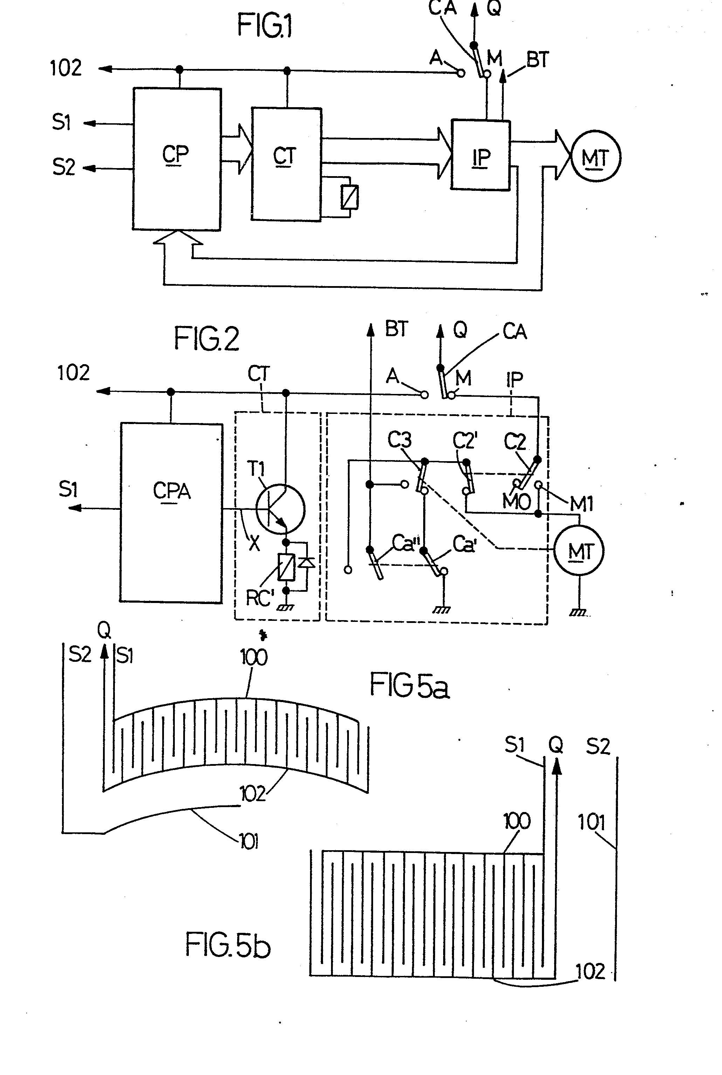

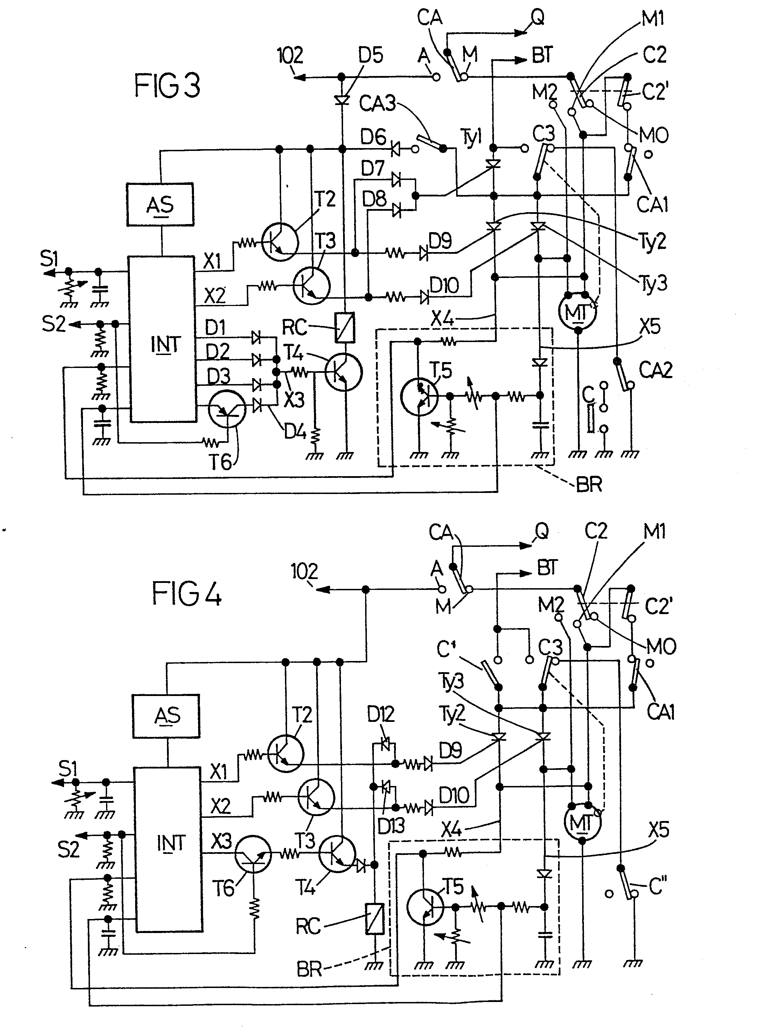

In the case depicted in Figure 2, where the device operates at one speed only, one single active position M1 is provided for the contact C2, while as regards Figures 3 and 4 provision is made for two active positions M1 and M2 for the first and second speed, respectively. During the rotation of the motor MT, the internal switch C3 is put alternately to earth and in contact with the positive potential BT of the battery.

The main operating characteristic of the device forming the subject of the invention is that it is designed to operate in an autonomous fashion and not in the orthodox manual way. Entrusted with the changeover from manual to autonomous operation is a main switch CA, connected to the positive potential Q on the dashboard, the configuration of which varies

from a position M in which the potential Q is connected to the said contact C2 or manual lever, to a position A in which the potential C is carried to a comb shaped conductor element 102 mounted on the windscreen (Figures 5a and 5b). The said element 102 faces another comb shaped element 100 that defines the probe S1. In the case of operation at more than one speed, a probe S2 is constituted by a linear element 101 spaced a greater distance away from the comb shaped element 102 than the probe S1 or element 100. In this way, when the rain closes at least one of the contacts between S1 and the element 102, the probe S1 is able to create a corresponding signal. When heavier rain is falling that succeeds in closing the contact between the element 102 and the probe S2, a fresh signal characteristic of the second speed of the windscreen wipers is created.

The said main switch CA also supplies the entire electronic control circuit of the motor MT. In the case illustrated in Figure 2, that is to say when the wipers operate only at the said first speed, the electronic circuit referred to above is constituted by an amplifier CPA, the input of which picks up the signal created by the probe S1, while the output of which supplies a signal X (when the probe S1 is alive) to a control circuit CT constituted by an ordinary transistor amplifier T1 whose output is supplied to a relay RC' provided to control a pilot interface IP that also contains the said orthodox manual operation circuit.

When excited, the relay RC' causes, in particular, the changeover of a double throw switch Ca'-Ca" from the inactive position shown in Figure 2, in which the contact Ca" is open and the contact Ca' connects the internal switch

C2 to earth, to the active position in which the contact Ca' is open and the contact Ca" places the motor MT in communication with the positive potential BT of the battery, via the said contact C2'.   In the active position of the double throw switch Ca'-Ca", the windscreen wipers start operating autonomously as a function of the continuous cycles supplied by the internal switch C3, for as long as the probe S1 stays alive.   Once it is no longer energized, namely when the rain has ceased, the said double throw switch returns to the inactive position and when the internal switch C3 is in the position depicted in Figure 2, the motor stops running.

Then the device in question is provided for operation at two or more speeds and there are, for example, the probes S1 and S2 in the composition thereof, the device, shown diagrammatically in Figure 1, can take the form illustrated in either Figure 3 or Figure 4.

Neither the resistive nor the capacitive elements have been numbered in the said figures since it was felt unnecessary to do so.   In the case illustrated in Figure 3, the detection/regulation circuit CP ascertains, through the probes S1 and S2 at the inputs thereof, the state of these and, through suitable signals X4 and X5 forthcoming from the pilot interface IP, also ascertains whether the motor MT is set at the first or second speed and, on the basis of the information detected, is able to supply to the downstream control circuit CT, suitable signals X1, X2 and X3 which, through the transistor amplifiers T2, T3 and T4, respectively, of the circuit CT, place the pilot interface IP in a condition to set in motion the motor MT at the first or second speed, or to stop it turning.    In particular, the pilot interface II is provided with a switch CA1, in series with the contact C2', which opens when the switch CA is in position A.    A switch CA2, in series with the internal switch C3 and earthed both normally and when non operative, opens when the switch CA is in position A.    A pair of thyristors TY1 and TY2 are connected in series to the potential PT of the battery and are also connected to the first speed winding of the motor MT.    The said thyristors are placed in the conducting state by the said signal X1 and, in particular, thyristor TY1 also by the signal X2, and they supply the said signal X4 to a detection block BR that utilizes a transistor T5 and is part of the said circuit CP.    In particular, the thyristor TY1 is connected in parallel to the internal switch C3.    A third thyristor TY3, that conducts through the signal X2, is placed between the second speed winding of the motor MT and the central node between the thyristors TY1 and TY2.    The thyristor TY3 supplies the second speed signal X5 to the detection block BR.

When one of the two probes S1 or S2 is energized, the said state is carried to one of the pins of an integrated circuit INT, supplied stably by a power source AS via the potential Q and a diode D5.    The power source, the integrated circuit and, as stated above, the detection block BR, are all part of the circuit CP.    If, for example, the active probe is S1, the integrated circuit places in the conducting state, through the signal X1 and the amplifier T2, the thyristors TY1 and TY2, through the diodes D7 and D9.    In this way, the motor MT runs at the first speed and, together with the windscreen, the wipers also clean the probe S1.

Should, during the last phase of the cycle, other water have fallen on to the probe (sufficient to be an annoyance to the driver), the windscreen wipers are kept in operation, as they are on each similar occasion.   In this way, constant and/or intermittent operation is achieved to suit the requirements.   If, instead, the rain is heavy enough to close also the circuit between the element 1C2 and the probe S2, the device attends to varying the windscreen wiper speed from the first to the second speed and, in turn, to returning to the first speed as soon as the rain decreases in intensity.

When, in particular, the probe S2 is also energized, the thyristors TY3 and TY1 are placed in the conducting state, with the other thyristor no longer conducting since the motor MT has already been brought to a standstill through the signal X3 coming from the integrated circuit, and through the diodes D1, D2, D3, D4 and the matching transistor T6. The signal X3 stops the motor MT both for a change in the speed and when it has stopped raining.   This is on account of the fact of the relay RC being energized and closing a switch C that is earthed and connected to the switch CA2 in the autonomous operation position.

It should also be stated that a circuital closure in the conduction of the thyristor TY3 through the diode D10 is brought about by the thyristor TY1 (through the diode D8); the said thyristor TY1 then being alternately shortcircuited by the contact C3.

The integrated circuit INT is, therefore, able to effect, from one moment to another, a fully autonomous control on the circuit through the signals coming from the probes and the windings of the motor. It is also pointed out that in order to halt the motor MT, if the supply to the dashboard is turned off, it is necessary for there to be a contact C13 which, through a diode D6, can carry the potential PP of the battery to the control circuit CT. The contact C13 closes with the switch CA in position A.

In the case depicted in Figure 4, where use is made of the same integrated circuit, the same power source and the same detection block, there are, in addition to the said switch C11, a pair of switches C' and C" placed in the active position by the relay RC which, this time, attends to stopping the motor MT only when deenergized. The inactive position of the switches C' and C" is that shown in Figure 4 in which switch C' is open and switch C" is earthed. In the active position, instead, switch C' is closed on to the potential PP of the battery and switch C" is open. This condition occurs in the presence of one of the signals X1, X2 or X3 that are carried, amplified, through the diode D12 or D13 to the relay RC. Should this condition not arise, then obviously the relay RC is inactive. Use is also made in the said case of two thyristors TY2 and TY3, identical to those described previously and having exactly the same functions, thyristor TY2 being placed in series with the switch C'. In the active position of the circuit, with the switch C' closed, the motor is run at the first or at the second speed depending on whether the thyristor to be placed in conduction is TY2 or TY3.

It is apparent that when the switch CA is turned to the M position, the motor MT is subjected to normal manual control.

Modifications to the circuits of a technical-practical nature and uses which though different, adopt the same concepts, such as for example the closing (and opening) of folding roofs when it starts to rain, obviously fall within the framework of protection afforded to the invention as described above and claimed hereinafter.

Claims:

1.    Windscreen wiper autonomous operation device, in which the motor MT thereof is connected to an orthodox circuit for manually operated windscreen wipers wherein provision is made for a hand operated lever for switching on the windscreen wipers, constituted by a double throw switch C2-C2' in which the configuration of the contact C2, connected to the positive potential Q derived from the dashboard of the vehicle, varies from a first inactive position M0, with the contact C2' earthing the supply to the motor MT through an internal switch C3 of the said motor, to at least one second active position M1 in which the contact C2 supplies the said potential Q to the motor MT, with the contact C2' open, the said internal switch C3 being connected in series to the said contact C2' and put alternately to earth and in contact with the positive potential BT of the battery at the time the motor MT is rotating, characterized by the fact that placed on the external side of the windscreen of the vehicle, in the region of the radius of action of the wiper blades, there is at least one conductor element 100 that defines a probe S1 and is opposite, close to but not in contact with a similar conductor element 102 to which, during autonomous operation, the said positive potential Q derived from the dashboard of the vehicle is carried, the said probe S1 creating, in the case of rain, and only when the water closes the contact between it and the said conductor element 102, for a downstream electronic circuit, a signal giving consent to the autonomous operation of the motor MT of the windscreen wipers, at a first speed.

2.    Device according to Claim 1 , characterized by the fact that placed on the external side of the windscreen of the vehicle, in the region of the radius of action of the wiper blades, there is at least one further conductor element 101 that defines a probe C2, a greater distance away from the said conductor element 102 than the said probe S1, the said second probe creating, in the case of heavy rain, and only when the water closes the contact between it and the said conductor element 102, for the said downstream electronic circuit, a signal giving consent to the autonomous operation of the motor MT of the windscreen wipers, at a second speed greater than the first.

3. Device according to Claims 1 or 2, characterized by the fact of comprising a main switch CA, connected to the positive potential Q on the dashboard, the configuration of which varies from a first position M, in which the said switch is in series with the said manual lever, to a second position A, in which the said positive potential Q is carried to the said conductor element 102, each probe being connected to the said electronic circuit that comprises a detection/regulation circuit CP which, through a control circuit CT placed downstream, attends to transferring suitable operating signals to a pilot interface IP comprising the said orthodox manual operation circuit, the essential task of which is to run the motor MT for as long, and only as long, as the water closes at least one of the contacts between each probe and the said conductor element 102.

4. Device according to Claim 3, in which it is envisaged that the windscreen wipers operate at one speed only, characterized by the fact that the said detection/regulation circuit is constituted by a suitable amplifier CPA that supplies a signal X, when the probe S1 is energized, to the said control circuit CT that is envisaged to be a normal amplifier T1 whose load is constituted by a relay RC' which, when energized, operates the changeover, inside the said pilot interface IP, of a double throw switch Ca'-Ca" from the inactive position, in which the contact Ca' earths the said internal switch C3 of the motor MT and the contact Ca" is open, to the active position in which the contact Ca' opens and the contact Ca" places the motor MT, through the said contact C2', in communication with the said positive potential BT of the battery, the said double throw switch Ca'-Ca" returning to the inactive position when the relay is no longer energized and the task of eventually terminating the wiping cycle being entrusted to the internal switch C3.

5. Device according to Claim 3, in which it is envisaged that the windscreen wipers operate at two or more speeds, characterized by the fact that the said detection/regulation circuit CP is able to ascertain the state of the two probes S1 and S2, and to ascertain, through suitable signals X4, X5 coming from the said pilot interface IP, whether the motor MT is to be operated at the first or at the second speed and, as a function of the acquired information, is able to supply the said control circuit CT with suitable signals X1, X2 and X3 which, through corresponding suitable means of amplification T2, T3 and T4, respectively, of the control circuit CT, place the said pilot interface IP, that contains the said orthodox manual operation circuit, in a condition to run the motor MT at the first or at the second speed or to stop autonomously the motor MT when the probes S1 and S2 are not energized.

6. Device according to Claim 5, characterized by the fact that, in addition to the said orthodox manual operation circuit, the said pilot interface II is provided with : a switch CA1, in series with the said contact C2', that opens automatically when the said main switch CA is placed in position A; a switch C12, in series with the said internal switch C3 in the position towards earth, that opens automatically when the said main switch CA is placed in position A; a pair of electronic switches constituted by corresponding thyristors TY1 and TY2, connected in series between the said potential BT of the battery and the first speed winding of the motor MT, and placed in the conducting state by the said signal X1 or X2 and by the signal X1, respectively, the said thyristors supplying the said first speed signal X4 to the said detection/regulation circuit CP, the thyristor TY1 being connected in parallel to the said internal switch C3; a third electronic switch TY3, placed in the conducting state by the said signal X2, situated between the second speed winding of the motor MT and the central node in between the said thyristors TY1 and TY2, the said thyristor TY3 supplying the said second speed signal X5 to the said detection/regulation circuit CP; and a switch C, connected in series to the switch CA2 in the open or changed over position and able to be earthed in the closed position by a relay RC, in turn energized by the said signal X3, for taking the motor MT completely out of action or for a halt due to a change in speed.

7. Device according to Claim 5, characterized by the fact that, in addition to the said orthodox manual operation circuit, the said pilot interface IP is provided with : a switch CA1, in series with the said contact C2', that opens automatically when the said main switch CA is placed in position A; two switches C' and C", the former connected in series to the potential BP of the battery and in parallel with the said internal switch C3, and the latter in series with the said internal switch C3 in the earth position, the configuration of the said switches varying from a first inactive position, in which C' is open and C" is closed towards earth, and a second active position, in which C' is closed and C" is open, the said switches being placed in the active position through the tripping of a relay RC by means of the said signal X1, X2 or X3, with the deenergizing of the relay RC bringing about the motor MT being taken completely out of operation or halted due to a change in speed; a first thyristor TY2, connected between the said switch C' and the first speed winding of the motor MT, placed in the conducting state by the said signal X1 and, in this case, supplying the said first speed signal X4 to the said detection/regulation circuit CF; and a second thyristor TY3 connected in series to the said internal switch C3 and to the said switch C', and connected to the second speed winding of the motor MT, placed in the conducting state by the said signal X2 and, in this case, supplying the said second speed signal X5 to the said detection/regulation circuit CF.

9. Device according to Claim 1, characterized by the fact that the said conductor element 102 and the said conductor element 100 that defines the probe S1 are of a comb conformation and that one penetrates into the other, without one touching the other.

0136984

# FIG.1

# FIG.2

# FIG 5a

# FIG.5b

FIG 3

FIG 4

0136984